# EUROPEAN PATENT SPECIFICATION

(11) **EP 2 458 343 B1**
(45) Date of publication and mention of the grant of the patent: **23.08.2017**
(21) Application number: 10802188.2
(22) Date of filing: 12.07.2010
(51) Int. Cl.: G01D 11/02, G01D 13/22, G01D 11/24

(54) **INSTRUMENT DRIVE DEVICE**
INSTRUMENTENANTRIEBSVORRICHTUNG
DISPOSITIF D'ENTRAÎNEMENT D'INSTRUMENT

(30) Priority: 21.07.2009 JP 2009169768
(43) Date of publication of application: 30.05.2012
(73) Proprietor: Nippon Seiki Co., Ltd., Niigata 940-8580 (JP)
(72) Inventor: WATANABE,Masahiro, Nagaoka, Niigata (JP)
(74) Representative: Carpmaels & Ransford LLP
(86) International application number: PCT/JP2010/061742
(87) International publication number: WO 2011/010568

(56) References cited:
- JP-A- 7 280 839
- JP-A- H0 961 464
- JP-A- 2004 251 656
- JP-U- 50 027 804
- JP-Y1- 47 036 125
- US-A- 3 995 499
- US-A- 5 686 832
- US-A- 6 067 867

## Description

### Technical Field

The present invention relates to an instrument drive device, and more particularly, to an instrument drive device having a feature in a bearing portion of a pointer shaft to which a pointer is attached.

### Background Art

A conventional instrument drive device includes a case body having a first bearing portion and a second bearing portion each passing through, and a pointer shaft pivotally supported on the first bearing portion and the second bearing portion.
One end of the pointer shaft protrudes outside from the case body and has a pointer attached thereto, and the other end also protrudes outside from the case body. For pressing the pointer into the pointer shaft, the exposed other end of the pointer shaft is abutted on a jig which receives the force applied to the pointer shaft at the time of the pressing. With such a configuration, no load is applied to the case body in pressing the pointer into the pointer shaft to allow prevention of damage to the case body (see, for example, Patent Document 1). US5686832B describes a miniature crossed coil gauge having a lower bobbin and an upper bobbin. Lower and upper bobbin sealingly engage one another to define an enclosed magnet cavity. Lower bobbin is provided with a thrust disk to magnetically cooperate with a magnet and associated shaft. Ferrofluid is injected into the magnet cavity via a bore formed in the lower bobbin. A downward biasing force causes the shaft to engage a ball bearing in order to seal the bore.

### Prior Art Document

### Patent Document

Patent Document 1: JP-A-2004-251656

### Summary of the Invention

### Problems that the Invention is to Solve

In such an instrument drive device, however, the other end of the pointer shaft which is the end portion on the lower side protrudes outside from the case body, so that the device has a problem in which a liquid such as a lubricant, if contained within the case body, may leak from the case body.

The present invention has been made in view of the abovementioned problem, and it is an object thereof to provide an instrument drive device which can avoid receiving any load on a case body in pressing a pointer into a pointer shaft and can prevent any leak of a liquid within the case body.

### Means for Solving the Problems

The present invention provides an instrument drive device including a case body including a first bearing portion and a second bearing portion each passing through, and a pointer shaft pivotally supported on the first bearing portion and the second bearing portion, a pointer being attached to a portion of the pointer shaft, the portion protruding outside from the case body, characterized in that the device includes a bearing body pressed in and held by the second bearing portion and restricting movement of the pointer shaft in an axis direction, the second bearing portion includes a shaft support portion pivotally supporting the pointer shaft and a holding portion in which the bearing body is pressed and held, and a diameter of the holding portion is smaller than a diameter of the shaft support portion.

The present invention provides the second bearing portion including a removal preventing portion having a smaller diameter than the diameter of the holding portion so as to prevent removal of the bearing body.

### Advantage of the Invention

According to the present invention, the intended object can be achieved to provide the instrument drive device which can avoid receiving any load on the case body in pressing the pointer into the pointer shaft and can prevent any leak of a liquid within the case body.

### Brief Description of the Drawings

[Fig. 1] A top view of a stepping motor which is an embodiment of the present invention.
[Fig. 2] A section view taken along line A-A in Fig. 1.
[Fig. 3] An enlarged section view of main portions of the present embodiment.
[Fig. 4] A top view of the stepping motor of the present embodiment with an upper case removed.

### Mode for Carrying Out the Invention

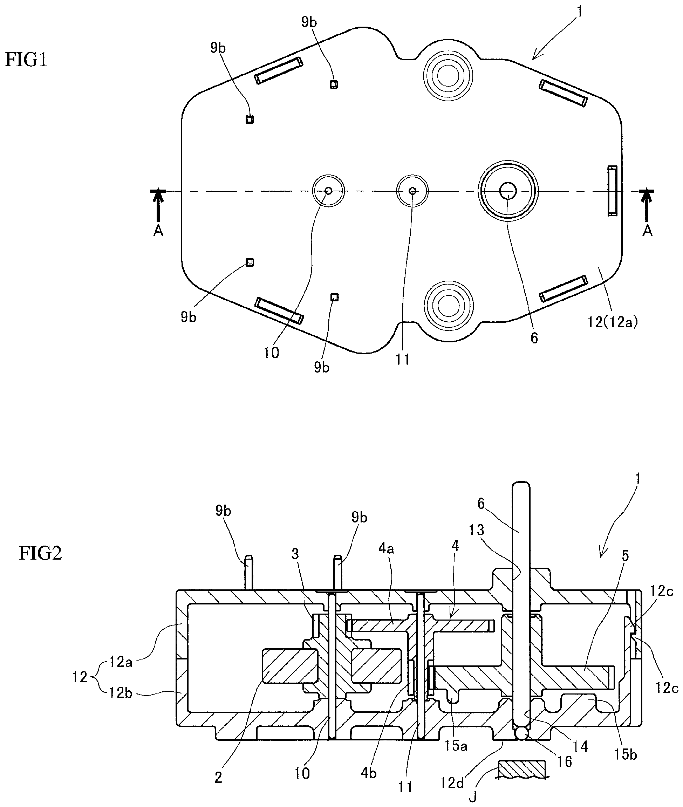

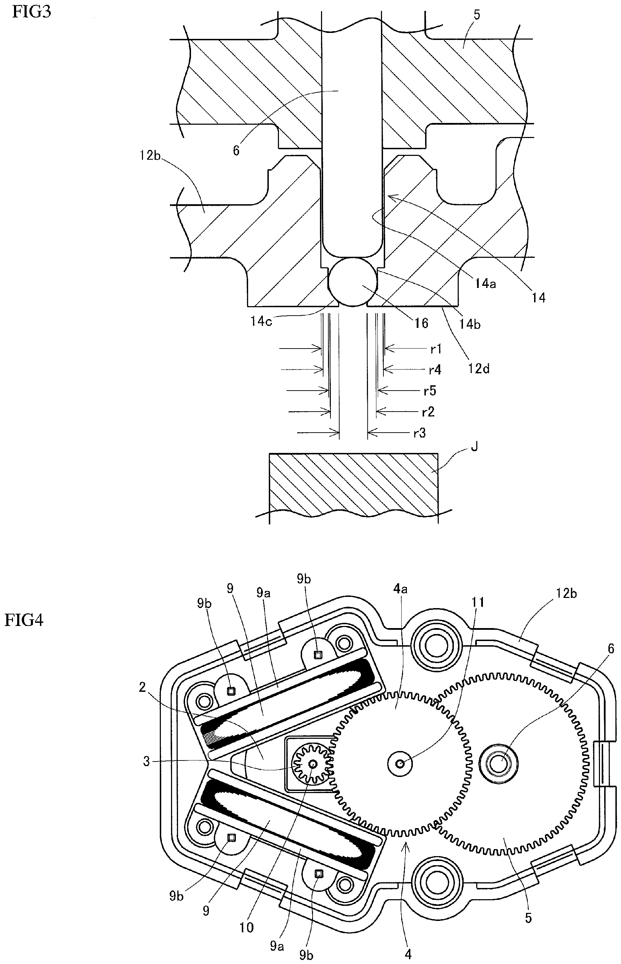

An embodiment of the present invention will hereinafter be described. Fig. 1 to Fig. 4 show one embodiment of the present invention.

An instrument drive device according to the present embodiment is a stepping motor 1. The stepping motor 1 has a rotor magnet 2 with multi-pole magnetization, a rotor gear 3 fixed to the rotor magnet 2, an intermediate gear 4 having a first gear 4a meshing with the rotor gear 3 and a second gear 4b provided on the same axis as that of the first gear 4a, an output gear 5 meshing with the second gear 4b of the intermediate gear 4, a pointer shaft 6 serving as the rotation center of the output gear 5, two excitation coils 9 producing a rotation magnetic field to supply rotation force to the rotor magnet 2, a first rotation shaft 10 serving as the rotation center of the rotor magnet 2 and made of metal, a second rotation shaft 11 serving as the rotation center of the intermediate gear 4 and made of metal, and a case body 12 accommodating the rotor magnet 2, the rotor gear 3, the intermediate gear 4, the output gear 5, the pointer shaft 6, the excitation coils 9, the first rotation shaft 10, and the second rotation shaft 11.

The rotor magnet 2 is formed of synthetic resin having magnetism so-called plastic magnet, and has a disc shape and a doughnut shape having a through hole at the center. The rotor gear 3 and the first rotation shaft 10 pass through the through hole. The rotor magnet 2 has a plurality of magnet poles such that they are placed uniformly in radial directions with the rotation shaft as the center. In the present embodiment, the rotor magnet 2 has four magnet poles in total including two N poles and two S poles. Thus, when the rotor magnet 2 rotates about the first rotation shaft 10 as the central axis, multi-pole magnetization is provided along the rotation direction on the outer peripheral face of the rotor magnet 2.

The rotor gear 3 is formed of synthetic resin having no magnetism. The first rotation shaft 10 passes through the rotor gear 3. The rotor magnet 2 and the rotor gear 3 are rotatably supported on the first rotation shaft 10. The rotor gear 3 rotates in association with the rotation of the rotor magnet 2.

The intermediate gear 4 is formed of synthetic resin having no magnetism and includes the first gear 4a and the second gear 4b integrally. The intermediate gear 4 is rotatably supported on the second rotation shaft 11.

The output gear 5 is formed of synthetic resin having no magnetism similarly to the rotor gear 3 and the intermediate gear 4. The output gear 5 is fixed to the pointer shaft 6 and rotates together with the pointer shaft 6.

In Fig. 2, the output gear 5 is provided integrally with a first protruding portion 15a forming stopper means 15 on a lower face. The first protruding portion 15a abuts on a second protruding portion 15b provided for the case body 12, later described, to stop the rotation of the output gear 5 at a predetermined position.

In the present embodiment, the intermediate gear 4 and the output gear 5 decelerate and transfer the rotation of the rotor gear 2.

The pointer shaft 6 is made of metal and pivotally supported on the case body 12. A pointer, not shown, is attached to a portion of the pointer shaft 6 that protrudes outside from the case body 12.

The excitation coil 9 is formed by winding metal wire having conductivity such as copper around a bobbin 9a made of synthetic resin. The excitation coil 9 is connected to control means through a terminal 9b provided for the bobbin 9a.

The bobbin 9a is a cylinder having a through hole with a rectangular section shape. The excitation coil 9 is placed around the rotor magnet 2. A portion of the disc face of the rotor magnet 2 is opposite to the inner peripheral face of the through hole in the state where a portion of the rotor magnet 2 is placed in the through hole of the bobbin 9a.

A driving waveform output from the control means, not shown, is input to each of the two excitation coils 9 to produce the rotation magnetic field in the rotor magnet 2 to supply the rotation force to the rotor magnet 2.

The case body 12 is made of synthetic resin having no magnetism and formed of an upper case 12a and a lower case 12b. The upper and lower cases 12a and 12b are fixed by hooking latch hooks 12c provided for the upper and lower cases 12a and 12b. The lower case 12b is provided integrally with the second protruding portion 15b which abuts on the first protruding portion 15a provided for the output gear 5. The case body 12 pivotally supports the pointer shaft 6, and holds the first rotation shaft 10 and the second rotation shaft 11 pressed in the case body 12 such that they are fixed with no rotation.

The case body 12 includes a first bearing portion 13 and a second bearing portion 14 which pivotally support the pointer shaft 6. The first bearing portion 13 is provided for the upper case 12a, and the second bearing portion 14 is provided for the lower case 12b. Each of the first bearing portion 13 and the second bearing portion 14 is a through hole and has a circular section shape in a direction perpendicular to the axis direction of the pointer shaft 6. A portion of the pointer shaft 6 protrudes outside from the case body 12 on the side of the first bearing portion 13, and the pointer is attached to the protruding portion.

The second bearing portion 14 includes a shaft support portion 14a pivotally supporting the pointer shaft 6 and a holding portion 14b having a diameter r2 smaller than a diameter r1 of the shaft support portion 14a. Each of the shaft support portion 14a and the holding portion 14b has a circular section shape in a direction perpendicular to the axis direction of the pointer shaft 6, and the circles are concentric. A bearing body 16 made of metallic ball in contact with the pointer shaft 6 to restrict the movement of the pointer shaft 6 in the axis direction is pressed in and held by the holding portion 14b. The lower end of the bearing body 16 is at substantially the same level as that of a bottom face 12d of the lower case 12b or is located inwardly of the bottom face 12d of the lower case 12b of the case body 12.

The diameter r1 of the shaft support portion 14a is larger than a diameter r4 of the pointer shaft 6 in order to support the pointer shaft 6 pivotally. The diameter r2 of the holding portion 14b is smaller than a diameter r5 of the bearing body 16 in order to press and hold the bearing body 16 therein. The shaft support portion 14a is smooth in order to minimize the resistance in pivoting the pointer shaft 6. The diameter r5 of the bearing body 16 is smaller than the diameter r4 of the pointer shaft 6 to prevent the bearing body 16 from damaging the shaft support portion 14a in inserting the bearing body 16 into the shaft support portion 14a in order to press the bearing body 16 into the holding portion 14b. Thus, the diameter r1 of the shaft support portion 14a, the diameter r2 of the holding portion 14b, the diameter r4 of the pointer shaft 6, and the diameter r5 of the bearing body 16 are listed as r1, r4, r5, r2 in descending order.

The second bearing portion 14 includes a removal preventing portion 14c having a diameter r3 smaller than that of the holding portion 14b. The diameter r3 of the removal preventing portion 14c has a tapered shape which is narrower from the inside toward the outside of the case body 12.

For fixing the pointer to the pointer shaft 6, a jig J is abutted on the bottom face 12d of the lower case 12b to press and fix the pointer to the pointer shaft 6. The force applied to the pointer shaft 6 in the pressing is received by the jig J through the bearing body 16.

With such a configuration, no load is applied to the case body 12 in pressing the pointer into the pointer shaft 6 to prevent damage to the case body 12. In addition, the bearing body 16 is pressed in and held by the second bearing portion 14 to allow prevention of leakage of a lubricant contained within the case body 12.

While the instrument drive device is realized by the stepping motor in the present embodiment, the present invention is not limited to the stepping motor. It is possible to use a cross-coil instrument body including a liquid such as damper oil within a case body.

### Industrial Applicability

The present invention is applicable to the instrument drive device containing a liquid within the case body and having the pointer pressed in the pointer shaft.

### Description of Reference Numerals and Signs

- 1: INSTRUMENT DRIVE DEVICE (STEPPING MOTOR)
- 6: POINTER SHAFT
- 12: CASE BODY
- 13: FIRST BEARING PORTION
- 14: SECOND BEARING PORTION
- 14a: SHAFT SUPPORT PORTION
- 14b: HOLDING PORTION
- 14c: REMOVAL PREVENTING PORTION
- 16: BEARING BODY
- J: JIG

## Claims

1. An instrument drive device (1) comprising a case body (12) including a first bearing portion (13) and a second bearing portion (14) each passing through, and a pointer shaft (6) pivotally supported on the first bearing portion (13) and the second bearing portion (14), a pointer being attached to a portion of the pointer shaft (6), the portion protruding outside from the case body (12),
**characterized in that**:
the device (1) comprises a bearing body (16) pressed in and held by the second bearing portion (14), and restricting movement of the pointer shaft (6) in an axis direction,
the second bearing portion (14) includes:
a shaft support portion (14a) pivotally supporting the pointer shaft (6); and
a holding portion (14b) in which the bearing body is pressed and held by the holding portion (14b),
and a diameter of the holding portion (14b) is smaller than a diameter of the shaft support portion (14a).

2. The instrument drive device (1) according to claim 1, **characterized in that** the second bearing portion (14) includes a removal preventing portion (14c) having a smaller diameter than the diameter of the holding portion (14b) so as to prevent removal of the bearing body (16).

## Patentansprüche

1. Instrumentantriebsvorrichtung (1), die einen Gehäusekörper (12), der einen ersten Lagerabschnitt (13) und einen zweiten Lagerabschnitt (14), die jeweils durch ihn hindurch verlaufen, umfasst, und einen Zeigerschaft (6), der auf dem ersten Lagerabschnitt (13) und dem zweiten Lagerabschnitt (14) schwenkbar gestützt wird, umfasst, wobei ein Zeiger an einem Abschnitt des Zeigerschafts (6) befestigt ist, wobei der Abschnitt von dem Gehäusekörper (12) nach außen vorragt,
**dadurch gekennzeichnet, dass**:
die Vorrichtung (1) einen Lagerkörper (16) umfasst, der durch den zweiten Lagerabschnitt (14) eingepresst und gehalten wird und eine Bewegung des Zeigerschafts (6) in einer Achsenrichtung beschränkt,
wobei der zweite Lagerabschnitt (14) Folgendes umfasst:
einen Schaftstützabschnitt (14a), der den Zeigerschaft (6) schwenkbar stützt; und
einen Halteabschnitt (14b), in den der Lagerkörper durch den Halteabschnitt (14b) eingepresst und gehalten wird,
und ein Durchmesser des Halteabschnitts (14b) kleiner ist als ein Durchmesser des Schaftstützabschnitts (14a).

2. Instrumentantriebsvorrichtung (1) nach Anspruch 1, **dadurch gekennzeichnet, dass** der zweite Lagerabschnitt (14) einen Entfernungsverhinderungsabschnitt (14c) umfasst, der zur Verhinderung des Entfernens des Lagerkörpers (16) einen Durchmesser aufweist, der kleiner als der Durchmesser des Halteabschnitts (14b) ist.

## Revendications

1. Dispositif d'entraînement d'instrument (1) comprenant un corps formant boîtier (12) comprenant une première partie formant palier (13) et une seconde partie formant palier (14) le traversant chacune, et un arbre d'aiguille (6) supporté de manière pivotante sur la première partie formant palier (13) et la seconde partie formant palier (14), une aiguille étant fixée à une partie de l'arbre d'aiguille (6), la partie faisant saillie vers l'extérieur à partir du corps formant boîtier (12),
**caractérisé en ce que** :
le dispositif (1) comprend un corps d'appui (16) enfoncé dans la seconde partie formant palier (14) et retenu par celle-ci, et limitant un mouvement de l'arbre d'aiguille (6) dans une direction axiale,
la seconde partie formant palier (14) comprenant :
une partie de support d'arbre (14a) supportant de manière pivotante l'arbre d'aiguille (6) ; et
une partie de retenue (14b) dans laquelle le corps d'appui est enfoncé et retenu par la partie de retenue (14b),
et un diamètre de la partie de retenue (14b) est inférieur à un diamètre de la partie de support d'arbre (14a).

2. Dispositif d'entraînement d'instrument (1) selon la revendication 1, **caractérisé en ce que** la seconde partie formant palier (14) comprend une partie de prévention de retrait (14c) présentant un diamètre inférieur au diamètre de la partie de retenue (14b) de façon à empêcher le retrait du corps d'appui (16).
